# EUROPEAN PATENT SPECIFICATION

(11) **EP 0 593 568 B1**
(45) Date of publication and mention of the grant of the patent: **24.05.2000**
(21) Application number: 92914237.0
(22) Date of filing: 08.07.1992
(51) Int. Cl.: H01S 3/06, H01S 3/094

(54) **FIBRE LASER**
FASERLASER
LASER A FIBRE OPTIQUE

(30) Priority: 09.07.1991 GB 9114730
(43) Date of publication of application: 27.04.1994
(73) Proprietor: BRITISH TELECOMMUNICATIONS public limited company, London EC1A 7AJ (GB)
(72) Inventor: MILLAR, Colin, Anderson, Felixstowe Suffolk IP11 9HP (GB); WHITLEY, Timothy, John, Felixstowe Suffolk IP11 9NE (GB); BRIERLEY, Michael, Charles, Ipswich Suffolk IP5 7SU (GB)
(74) Representative: Roberts, Simon Christopher
(86) International application number: PCT/GB92/01234
(87) International publication number: WO 93/01637

(56) References cited:
- JOURNAL OF NON-CRYSTALLINE SOLIDS. vol. 140, no. 1-3, 2 January 1992, AMSTERDAM NL pages 179 - 183 S.C. GOH 'A spectroscopic study of the best pump wavelength in the 800 nm band for erbium-doped fluorozirconate fibre amplifiers'
- APPLIED PHYSICS LETTERS. vol. 54, no. 23, 5 June 1989, NEW YORK US pages 2301 - 2302 R.A. MCFARLANE 'Dual wavelength visible upconversion laser' cited in the application
- ELECTRONICS LETTERS. vol. 27, no. 20, 26 September 1991, STEVENAGE GB pages 1785 - 1786 T.J. WHITLEY ET AL. 'Upconversion pumped green lasing in erbium doped fluorozirconate fibre'
- ELECTRONICS LETTERS. vol. 28, no. 2, 16 January 1992, STEVENAGE GB pages 111 - 113 J.Y. ALLAIN ET AL. 'Tunable green upconversion erbium fibre laser'
- Electronics Letters, vol. 27, no. 2, January 1991, pages 184-186
- Electronics Letters, vol. 26, no. 22, October 1990, pages 1871-1873

## Description

This invention relates to a fibre laser.

The impact that an efficient, inexpensive and reliable visible laser source would have on data storage, display technology, undersea communications and optical processing has provided the stimulus for much recent work on solid state visible lasers. One approach that has yielded much success is the use of upconversion processes within rare earth doped materials to produce laser emission at a wavelength significantly shorter than the pump wavelength. Applied to bulk crystals, lasing has been demonstrated at 380nm in Nd: LaF₇, and at 551nm and 671nm in Er:YLiF₄ (see MACFARLANE, R. M., TONG F., SILVERSMITH, A. J., AND LENTH, W.: 'Violet cw neodymium upconversion laser', Appl. Phys. Lett., 1988, 52, (16), pp. 1300-1302, and MACFARLANE, R. M.: 'Dual wavelength visible upconversion laser', Appl Phys. Lett., 1989, 54, (23), pp. 2301-2302, respectively). Unfortunately, all of these schemes require liquid nitrogen cooling. However, the recent demonstration of visible lasing at 480nm in Tm³⁺ -doped fluoride fibre (see ALLAIN, J. Y., MONERIE, M AND POIGNANT, H.: 'Blue upconversion fluorozirconate fibre laser', Electron. Lett., 1990, 26 (3), pp. 166-168) coupled with the demonstration of room temperature lasing at red, green and blue wavelengths in praseodymium doped fluorozirconate glass fibre (see SMART, R. G., HANNA, D. C., TROPPER, A. C., DAVEY, S. T., CARTER, S. F., SZEBESTA, D,: 'CW upconversion lasing at blue, green and red wavelengths in an infrared-pumped Pr³⁺-doped fluoride fibre at room temperature', PD paper, CLEO 91, Baltimore, Maryland, USA (also published in Electron. Lett., 1991, 27, (14), pp 1307-1309) has dramatically changed the viability of such upconversion pumped laser schemes.

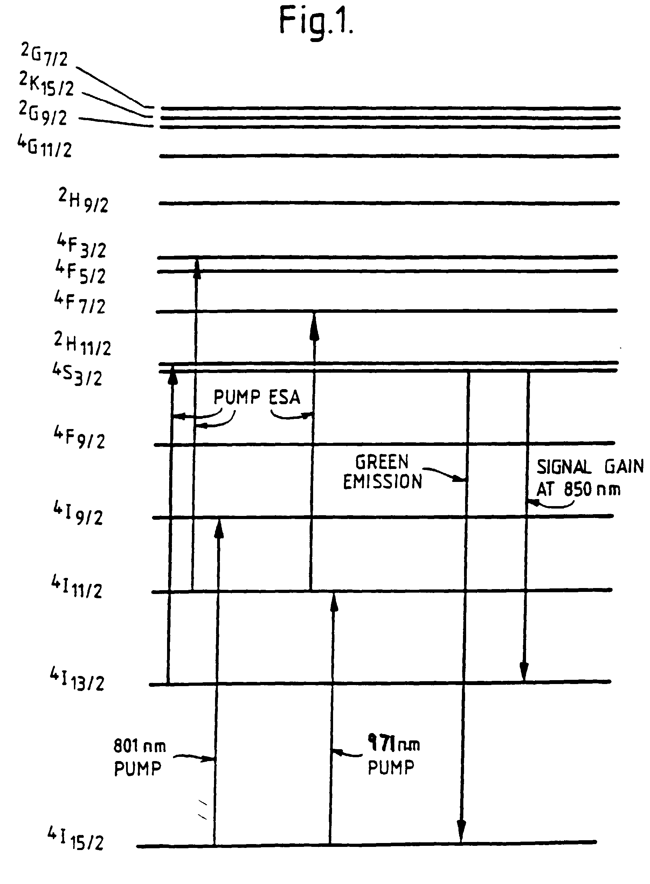

The applicants have determined that significant gain at 850nm can be achieved when erbium doped fluorozirconate fibre is pumped at 800nm. This has been reported in Whitley et al "23dB gain up-conversion pumped erbium-doped fibre amplifier operating at 850nm", Electron. Lett., 17 January 1991, pp 184-186 and in Millar et al "Efficient up-conversion pumping at 800nm of an erbium-doped fluoride fibre laser operating at 850nm", Electron. Lett., 25 October 1990, pp 1871-1873. The 850nm emission observed originates from the ⁴S_{3/2} level, and requires the sequential absorption of 800nm pump photons. The present invention is based on the observation by the applicants that there is also green fluorescence which is ascribed to a transition between the ⁴S_{3/2} level and the ⁴I_{15/2} ground state of the system (Fig. 1). In bulk crystals doped with erbium (Er:YLiF₄) this is a well known transition, and has resulted in upconversion lasing at 551nm when cooled to 77K. (See McFarlane *ibid*. - Appl. Phys. Lett 54(23))

In such bulk crystal lasers, ions are excited into the upper laser level predominantly through an ion-ion interaction between ions residing in the ⁴I_{11/12} manifold. However, in lightly-doped fluorozirconate fibre, ion-ion interactions are negligible, and the dominant excitation mechanism is attributed by the applicant to excited state absorption (ESA) of pump photons.

Fig. 1 represents the energy levels of the trivalent erbium ion, with the relevant green lasing transition indicated between the ⁴S_{3/2} level and the ⁴I_{15/2} ground state. The upper laser level may be populated by the sequential absorption of 801nm pump photons in a process which involves excitation of ground state ions into the ⁴I_{9/2} band, some of which then branch into the ⁴I_{11/2} and the ⁴I_{13/2} levels. These ions are then further excited by pump photons into the ⁴F_{3/2} the ²H_{11/2} and other levels. A large proportion of the ions in these higher energy levels then relax into the ⁴S_{3/2} upper laser level, from which a direct transition to the ground state is responsible for the green emission.

According to one aspect, the present invention provides a laser for room temperature operation comprising: a fluorozirconate optical waveguide doped with erbium ions, the fluorozirconate optical waveguide having an LP11 mode cut-off wavelength of 790 nm or less; reflectors arranged in relation to said optical waveguide to form an optical cavity having a resonant wavelength of about 546nm; and optical pump means coupled to the waveguide to provide an optical pump signal which, in use, causes the optical cavity to lase at about 546nm; wherein the optical pump means provides a pump signal having a wavelength in the range of 791nm to 812nm and said pump signal provides a population inversion of erbium ions between the ⁴S_{3/2} energy level and the ⁴I_{15/2} energy level by excited state absorption.

Preferably the optical pump means provides a signal having a wavelength of about 801nm. The fluorozirconate optical waveguide may be a fluorozirconate optical fibre, which may be doped with about 0.05wt% (5x10²ppm by weight) erbium ions. The optical pump means may comprise a semiconductor laser diode.

The invention has been demonstrated in standard ZBLAN fluorozirconate waveguides; the proportions of the glass components is not expected to be critical.

The pump may be coupled to the fibre by any known appropriate technique. The high numerical aperture fluorozirconate fibre may be spliced to a silica fibre so that readily-available fused couplers, for example, can be used to couple pump and signal sources to the doped fibre.

According to a second aspect, the present invention provides a method of providing lasing in the green region of the visible spectrum, the method comprising optically pumping a laser cavity with pump energy having a wavelength in the range of 791nm to 812nm, the cavity comprising a fluorozirconate optical waveguide doped with erbium ions having an LP11 mode cut-off wavelength of 790 nm or less and reflectors arranged about the optical waveguide to define the laser cavity, thereby supporting a population inversion of erbium ions between the ⁴S_{3/2} and ⁴I_{15/2} energy levels by excited state absorption and providing stimulated emission at a lasing wavelength of about 546nm.

According to a third aspect, the present invention provides a method of providing optical amplification in the green region of the visible spectrum, the method comprising applying optical pump energy having a wavelength in the range of 791 nm to 812nm to a fluorozirconate optical waveguide doped with erbium ions and having an LP11 mode cut-off wavelength of 790 nm or less, thereby supporting a population inversion of erbium ions between the ⁴S_{3/2} and ⁴I_{15/2} energy levels by excited state absorption; and introducing an optical signal to be amplified into said waveguide, wherein the waveguide provides optical gain at around 546 nm through stimulated emission of radiation from erbium ions relaxing back to the ⁴I_{15/2} energy level.

According to a fourth aspect, the present invention provides an optical amplifier for amplifying light in the green region of the visible spectrum, the amplifier comprising; a fluorozirconate optical waveguide doped with erbium ions, the fluorozirconate optical waveguide having an LP11 mode cut-off wavelength of 790 nm or less; optical pump means coupled to the waveguide to provide an optical pump signal which, in use, provides amplification at about 546nm; characterised in that the optical pump means provides a pump signal having a wavelength in the range of 791nm to 812nm and said pump signal provides a population inversion of erbium ions between the ⁴S_{3/2} energy level and the ⁴I_{15/2} energy level by excited state absorption.

The optical pump means may provide a signal having a wavelength of about 801nm. The fluorozirconate optical waveguide may be a fluorozirconate optical fibre. The fluorozirconate optical fibre may be doped with about 0.05wt% (5x10²ppm by weight) erbium ions.

The reflectors, which may be mirrors or other reflectors such as Sagnac loop reflectors, define a Fabry-Perot cavity, and in known manner are selected to provide reflections sufficient to sustain lasing only at the desired wavelength.

When pumped at 801nm the green emission suffers from competition with the 4-level 850nm transition. The applicants have determined that, for lasing to occur on this ⁴S_{3/2}-⁴I_{13/2} transition, it is necessary to pump ions out of the, long-lived, ⁴I_{13/2} terminal state. In the 801nm pumped scheme, this condition is met through the strong pump ESA out of ⁴I_{13/2} state.

It has been found preferable to use a pump wavelength of about 971nm. In this 971nm pumping scheme, a population is allowed to build up in the ⁴I_{13/2} level, and thus reduce the likelihood of transitions at 850nm.

The dopant concentrations useful with the present invention are governed by certain general criteria applicable to doped waveguide amplifiers. For low dopant levels of about 0.01 wt% (100ppm by weight), the length of the doped waveguide must be long enough to provide the required gain, but this competes with the fibre background loss of about 0.2dB/m which effectively diminishes the amplifier or laser performance. To optimise the length-density product, values of concentration of 0.1 wt% (1000ppm by weight) are typically chosen. At a concentration of about 1 wt% (10⁴ppm by weight), various ion-ion interactions occur which degrade the amplifier or laser performance. At concentrations in excess of about 4wt% (4x10⁴ppm by weight), the glass becomes unstable and unusable. These considerations are well known, and the level of dopant required in a given application can be readily determined.

These considerations are well known, and the level of dopant required in a given application can be readily determined. Thus, the upper limit to dopant concentration is imposed by the effect of the ion-ion interactions. This process occurs when two or more ions are sufficiently close to each other within the fibre to exchange energy. Such an energy transfer usually results in one ion being excited to a higher energy level and the other ion decaying to the ground state. Though, in some cases, this mechanism can be usefully employed to excite a particular energy level, it is more often a parasitic process and should, therefore, be avoided. In a fluoride fibre, ion-ion interactions can be avoided if the dopant level is kept below around 1wt%.

The lower limit for dopant concentration is set by fibre background loss. In a fibre, the total propagation loss consists of two components, one due to the ionic loss and the other due to the fibre background loss. The first of these loss terms is useful, whilst the second is not. If the dopant concentration is reduced, then the ionic loss reduces also (i.e. the ionic loss coefficient is linearly proportional to the dopant concentration). In a doped fibre device, one clearly wants the useful ionic loss to dominate the parasitic background loss. For erbium-doped fluoride fibre of typical loss and with typical fibre parameters, this condition is satisfied for dopant concentrations above 0.001wt% (10ppm by weight). As such this sets the practical lower limit to dopant concentration.

On the basis of the above criteria, waveguide lengths will generally be in the range 0.1 to 10m, with lengths in the range 1 to 5m being preferred.

The invention will now be described, by way of example, with reference to the accompanying drawings, in which:
Figure 1 is a diagram showing the energy levels of a trivalent erbium ion in a fluorozirconate host;
Figures 2 and 3 are schematic diagrams of first and second forms of laser constructed in accordance with the present invention;
Figure 4 is a graph of the absorbed pump power at threshold as a function pump wavelength for the laser of Figure 2;
Figures 5 and 6 are graphs of the power emitted at a wavelength of 546nm by the lasers of Figures 2 and 3 when pumped at at 801nm and 971nm respectively, as a function of launched pump power; and
Figure 7 is a schematic diagram of a third form of laser constructed in accordance with the present invention.

Referring to Figure 1, lasing at a wavelength of 546nm is achieved by establishing a population inversion between the ⁴S_{3/2} upper level and the ⁴I_{15/2} ground state. Two alternative pump excitation schemes can be employed to achieve this inversion. In the first, pump light at a wavelength of about 801nm is used to excite ions into the ⁴I_{9/2} level, a proportion of which excited ions then branch into the long-lived ⁴I_{11/2} and ⁴I_{13/2} states. These ions then undergo further excitation through the sequential absorption of pump photons. This process of pump excited state absorption (ESA) excites ions into the ²H_{11/2} and ⁴F_{3/2} states, from where they decay non-radiatively into the ⁴S_{3/2} upper laser level.

In the second excitation scheme, pump light at a wavelength of about 971nm is used to excite ions into the ⁴I_{11/2} state from which ESA of pump photons promotes ions into the ⁴F_{7/2} state. Non-radiative decay from this level then establishes a population in the ⁴S_{3/2} upper laser level, from which green lasing can once again occur to the ground state.

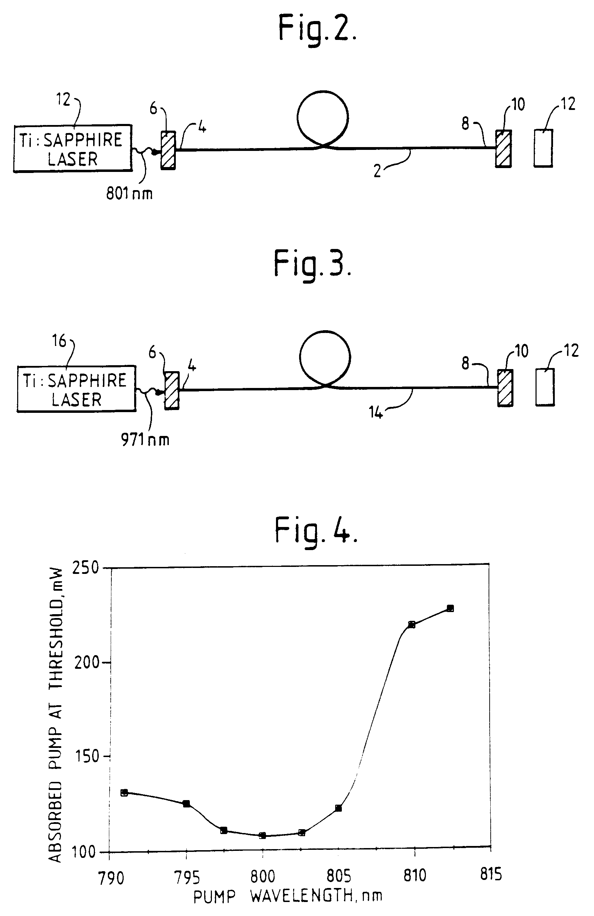

Referring now to Figure 2, a laser according to the present invention is based on a 2.4m length of standard formulation ZBLAN fluorozirconate fibre 2 doped to about 0.05wt% (500ppm by weight) with erbium ions. The fibre Δn is 0.007 and the LP11 mode cut-off is 790nm. The fibre background loss at both pump and signal wavelengths is estimated to be around 1.2dB/m. A simple Fabry-Perot laser cavity is formed by butting an input end 4 of the fibre 2 against a dielectric mirror 6, the mirror being highly reflecting at 546nm and highly transmitting at 800nm/850nm; and by butting an output end 8 of the fibre against a mirror 10 which is 65% reflecting to green light and highly transmitting at 800nm/850nm. 801nm pump light is derived from an Ar⁺ pumped Ti: Sapphire laser 12 which is end-fire launched through the input mirror 6. A pump blocking filter 12 is used to separate the remnant pump and green emission after transmission through the output mirror 10.

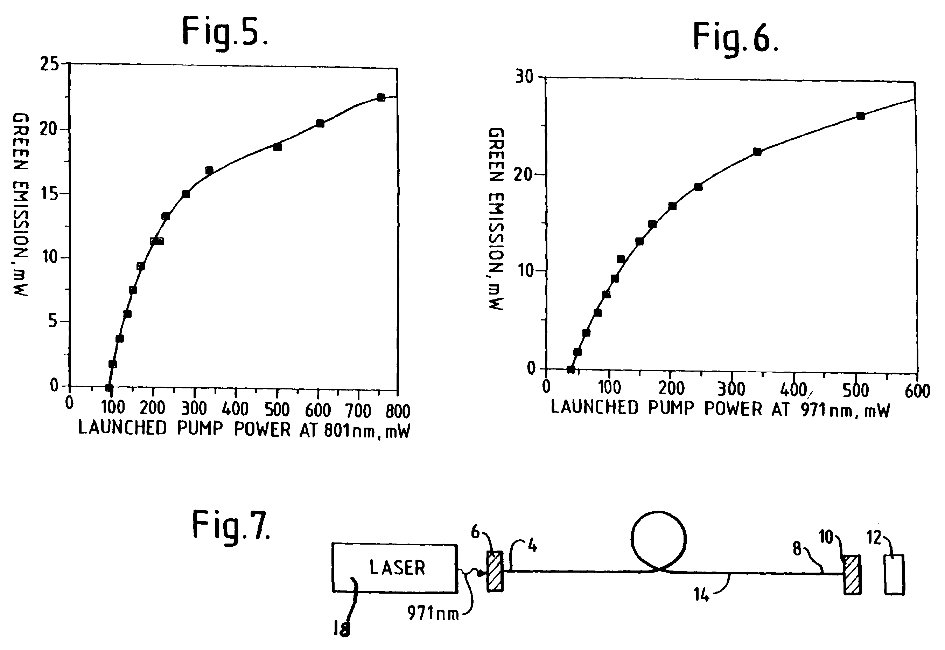

Fig. 5 depicts the evolution of output power at a wavelength of around 546nm with the absorbed pump power at a wavelength of 801nm. The threshold for lasing is around 100mW absorbed pump power, which corresponds to a launched pump power of 160mW. The maximum output power achieved is 23mw for an absorbed pump power of 780mW. Two definite slopes are apparent from this lasing characteristic. Taking the gradient of the initial part of this graph, a slope efficiency against absorbed pump power of 11% is obtained. The saturation behaviour beyond pump powers of 250mW is thought to be associated with the competing laser transition at 850nm. In general, it is found that the linear region below 250mW corresponds to green lasing alone, whereas the reduced slope beyond 250mW corresponds to simultaneous lasing at both 850nm and 546nm.

To assess the sensitivity to pump wavelength, the pump power absorbed at threshold is measured for different pump wavelengths. These results are shown in Figure 4. Lasing action in the green could be sustained using pump wavelengths ranging from 791 to 812nm, though most efficient operation was achieved using a pump wavelength of 801nm. The relative insensitivity to pump wavelength (less than 20% change in lasing threshold for ±5nm change in pump wavelength) means that standard Fabry-Perot laser diodes could be used as a pump source. It should also be noted that the lasing threshold rises more rapidly when the pump wavelength is moved to longer wavelengths. This asymmetry could possibly be explained by the presence of an ESA at 550nm between the ⁴I_{13/2} and ²H_{9/2} levels. In tuning the pump wavelength, the relative rate at which ions are pumped out of the ⁴I_{13/2} and ⁴I_{11/2} levels is changed, ESA from the ⁴I_{13/2} level being centred at 790nm, and ESA from the ⁴I_{11/2} level being at 810nm. The sharp rise in lasing threshold observed when the pump wavelength is tuned beyond 805nm could, therefore, be explained by a reduced pump depopulation of the ⁴I_{13/2} level, coupled with the strong signal ESA in the green from this level.

As mentioned above, simultaneous lasing at 850nm and 546nm is observed under certain conditions, though at present it is not clear exactly what dictates which lasing transition dominates. It is also noted that, if the laser is not operated for a period of time greater than a few hours, then the 850nm transition preferentially lases instead of the green transition, the green lasing threshold having risen significantly (>1W). However, once lasing has been achieved in the green, the green threshold drops consistently to a value around 100mW, whereas the 850nm lasing is suppressed. This 'memory' of the recent past of the laser is consistently observed, though difficult to investigate because of its several hour period.

Spectral analysis of the green laser emission indicates simultaneous lasing on several lines ranging from 543nm to 548nm, variations in pump wavelength and power causing changes, as yet to be quantified, in the output spectrum.

The slope efficiency with which 801nm pump photons are converted into green light is around 11%. This figure is quite remarkable when one considers the pump excitation mechanism and the background loss in the fibre at both pump and signal wavelengths. In a system with such complicated population dynamics, it is difficult to predict the exact effect which these losses will have on the device efficiency and threshold, but a reduction of the 2.9dB single pass pump loss and the 5.8dB round-trip loss at the lasing wavelength will result in a substantial increase in overall efficiency.

As described above, when pumped at 801nm the green emission suffers from competition with the 4-level 850nm lasing transition. The applicants have determined that, for lasing to occur on this ⁴S_{3/2}-⁴I_{13/2} transition, it is necessary to pump ions out of the long-lived, ⁴I_{13/2} terminal state. In the 801nm pumped scheme described above, this condition is met through the strong pump ESA out of the ⁴I_{13/2} level.

Figure 3 shows an embodiment similar to that of Figure 2 with common elements assigned the same reference numerals. In this case the laser is pumped by a 971nm optical pump signal derived from the Ar⁺ pumped Ti: Sapphire laser 12. In this pumping scheme, a population is allowed to build up in the ⁴I_{13/2} level to reduce the likelihood of lasing at 850nm. As in the embodiment of Figure 2, a laser cavity is formed between a highly-reflecting mirror 6 and a mirror 10 65% reflecting to green wavelengths. The 3m fluorozirconate fibre 14 used in Figure 3 has a Δn of 0.014, and a cut-off wavelength of around 790nm. The fibre background loss at the pump wavelength has been measured as 0.25dB/m, which for this cavity corresponds to a 0.75dB loss at the pump wavelength of 971nm. Initial measurements using this fibre 14 have shown that green lasing can indeed be achieved when pumping at 971nm; and, although 850nm fluorescence is observed, no competing lasing is noted.

Figure 6 shows the evolution of lasing output power with launched pump power for the laser of Figure 3. The pump threshold improves to 40mW absorbed (50mW launched), and the slope efficiency increases to 15% with respect to launched pump power. The maximum output power observed is 27mW for a launched pump power of 500mW.

The present invention provides room temperature lasing at 546nm on the ⁴S_{3/2} - ⁴I_{15/2} transition of erbium, in a fluorozirconate glass host when pumped at wavelengths of either 801nm or 971nm.

In both pumping schemes, lasing output powers in excess of 20mW have been observed combined with slope efficiencies in excess of 10%. Though further measurements are required fully to assess the relative merits of 801nm and 971nm pumping it appears that suppression of the parasitic 850nm lasing transition can be achieved by pumping at a wavelength of 971nm which is merely an example useful for the understanding of the invention.

The potential impact of an efficient and reliable visible laser source is vast. The particular attraction of either of the above schemes is that they employ a single pump laser operating at a wavelength compatible with the present range of commercially-available, high power FP laser diodes. Erbium doped fluorozirconate fibre lasers may offer efficient means of converting practical semiconductor laser diodes into the much coveted blue/green region of the spectrum.

Figure 7 shows an embodiment similar to that of Figure 3 with common elements assigned the same reference numerals. In this instance, the 971nm pump signal is obtained from a semiconductor laser (18) which is expected to operate successfully on the basis of the fibre characteristics determined above. Pumping at about 800nm with a semiconductor source is also expected to be readily achieved.

## Claims

1. A laser for room temperature operation comprising:
a fluorozirconate optical waveguide (2) doped with erbium ions, the fluorozirconate optical waveguide having an LP11 mode cut-off wavelength of 790 nm or less;
reflectors (6,10) arranged in relation to said optical waveguide to form an optical cavity having a resonant wavelength of about 546nm; and
optical pump means (12) coupled to the waveguide to provide an optical pump signal which, in use, causes the optical cavity to lase at about 546nm; wherein
the optical pump means provides a pump signal having a wavelength in the range of 791nm to 812nm and
said pump signal provides a population inversion of erbium ions between the ⁴S_{3/2} energy level and the ⁴I_{15/2} energy level by excited state absorption.

2. A laser according to claim 1, wherein the optical pump means (12) provides a signal having a wavelength of about 801nm.

3. A laser according to claim 1 or claim 2, wherein the fluorozirconate optical waveguide (2) is a fluorozirconate optical fibre.

4. A laser according to claim 3, wherein the fluorozirconate optical fibre (2) is doped with about 0.05wt% (5x10²ppm by weight) erbium ions.

5. A laser according to any one of the preceding claims, wherein the optical pump means (12) comprise a semiconductor laser diode.

6. A method of providing lasing in the green region of the visible spectrum, the method comprising optically pumping a laser cavity with pump energy having a wavelength in the range of 791nm to 812nm, the cavity comprising a fluorozirconate optical waveguide (2) doped with erbium ions having an LP11 mode cut-off wavelength of 790 nm or less and reflectors (6,10) arranged about the optical waveguide to define the laser cavity, thereby supporting a population inversion of erbium ions between the ⁴S_{3/2} and ⁴I_{15/2} energy levels by excited state absorption and providing stimulated emission at a lasing wavelength of about 546nm.

7. A method of providing optical amplification in the green region of the visible spectrum, the method comprising
applying optical pump energy having a wavelength in the range of 791nm to 812nm to a fluorozirconate optical waveguide (2) doped with erbium ions and having an LP11 mode cut-off wavelength of 790 nm or less, thereby supporting a population inversion of erbium ions between the ⁴S_{3/2} and ⁴I_{15/2} energy levels by excited state absorption; and
introducing an optical signal to be amplified into said waveguide (2), wherein the waveguide provides optical gain at around 546 nm through stimulated emission of radiation from erbium ions relaxing back to the ⁴I_{15/2} energy level;

8. An optical amplifier for amplifying light in the green region of the visible spectrum, the amplifier comprising;
a fluorozirconate optical waveguide (2) doped with erbium ions, the fluorozirconate optical waveguide having an LP11 mode cut-off wavelength of 790 nm or less;
optical pump means (12) coupled to the waveguide (2) to provide an optical pump signal which, in use, provides amplification at about 546nm; characterised in that
the optical pump means (12) provides a pump signal having a wavelength in the range of 791nm to 812nm and
said pump signal provides a population inversion of erbium ions between the ⁴S_{3/2} energy level and the ⁴I_{15/2} energy level by excited state absorption.

9. An optical amplifier according to claim 8, wherein the optical pump means (12) provides a signal having a wavelength of about 801nm.

10. An optical amplifier according to claim 8 or claim 9, wherein the fluorozirconate optical waveguide (2) is a fluorozirconate optical fibre.

11. An optical amplifier according to claim 10, wherein the fluorozirconate optical fibre (2) is doped with about 0.05wt% (5x10²ppm by weight) erbium ions.

## Patentansprüche

1. Laser für den Betrieb bei Raumtemperatur, mit:
einem optischen Wellenleiter (2) mit Fluorozirkonat, der mit Erbiumionen dotiert ist, wobei der optische Wellenleiter mit Fluorozirkonat eine Grenzwellenlänge im LP11-Modus von 790 nm oder weniger hat;
Reflektoren (6, 10), die so in bezug auf den optischen Wellenleiter angeordnet sind, daß ein optischer Hohlraum mit einer Resonanzwellenlänge von etwa 546 nm gebildet ist; und
einer optischen Pumpeinrichtung (12), die mit dem Wellenleiter gekoppelt ist, um ein optisches Pumpsignal zu liefern, das bei Verwendung zum Lasen des optischen Hohlraums bei etwa 546 nm führt; wobei
die optischen Pumpeinrichtung ein Pumpsignal mit einer Wellenlänge liefert, die im Bereich zwischen 791 nm und 812 nm liegt, und wobei
das Pumpsignal eine Populationsumkehr der Erbiumionen bewirkt zwischen dem ⁴S_{3/2}-Energieniveau und dem ⁴I_{5/2}-Energieniveau durch Anregungszustandsabsorption.

2. Laser nach Anspruch 1, bei dem die optische Pumpeinrichtung (12) ein Signal mit einer Wellenlänge von etwa 801 nm liefert.

3. Laser nach Anspruch 1 oder 2, bei dem der optischen Wellenleiter (2) mit Fluorozirkonat eine optische Faser mit Fluorozirkonat ist.

4. Laser nach Anspruch 3, bei dem die optische Faser (2) mit Fluorozirkonat mit etwa 0,05 Gew. -% (5 x 10² ppm gewichtsbezogen) Erbiumionen dotiert ist.

5. Laser nach einem der vorherigen Ansprüche, bei dem die optische Pumpeinrichtung (12) eine Halbleiterlaserdiode aufweist.

6. Verfahren zum Herbeiführen von Lasen im grünen Bereich des sichtbaren Spektrums, mit optischem Pumpen eines Laserhohlraums mit Pumpenergie einer Wellenlänge im Bereich von 791 nm bis 812 nm, wobei der Hohlraum einen optischen Wellenleiter (2) mit Fluorozirkonat aufweist, der mit Erbiumionen dotiert ist und eine Grenzwellenlänge des LP11-Modus von 790 nm oder weniger hat und wobei Reflektoren (6, 10) am optischen Wellenleiter so angeordnet sind, daß sie den Laserhohlraum definieren, wodurch sie die Populationsumkehr der Erbiumionen zwischen den ⁴S_{3/2}- und ⁴I_{15/2}-Energieniveaus durch Anregungszustandsabsorption unterstützen und zu stimulierter Emission bei einer Laserwellenlänge von etwa 546 nm führen.

7. Verfahren zum Herbeiführen optischer Verstärkung im grünen Bereich des sichtbaren Spektrums, mit Zuführen optischer Pumpenergie einer Wellenlänge im Bereich von 791 nm bis 812 nm zu einem optischen Wellenleiter (2) mit Fluorozirkonat, der mit Erbiumionen dotiert ist und eine Grenzwellenlänge im LP11-Modus von 790 nm oder weniger hat, wodurch eine Populationsumkehr der Erbiumionen zwischen den ⁴S_{3/2}- und ⁴I_{15/2}-Energieniveaus durch Anregungszustandsabsorption unterstützt wird; und Einleiten eines zu verstärkenden Optischen Signals in den Wellenleiter (2), wobei der Wellenleiter optische Verstärkung bei etwa 546 nm durch Stimulierte Emission von Strahlung von Erbiumionen führt, die zurück in das ⁴I_{15/2}-Energieniveau fal -

8. Optischer Verstärker zum Verstärken von Licht im grünen Bereich des sichtbaren Spektrums, mit:
einem Wellenleiter (2) mit Fluorozirkonat, der mit Erbiumionen dotiert ist, wobei der optische Wellenleiter mit Fluorozirkonat eine Grenzwellenlänge im LP11-Modus von 790 nm oder weniger hat;
einer optischen Pumpeinrichtung (12), die mit dem Wellenleiter (2) geloppelt ist, um ein optisches Pumpsignal zu liefern, das bei Verwendung zur Verstärkung bei etwa 546 nm führt,
dadurch gekennzeichnet, daß
die optische Pumpeinrichtung (12) ein Pumpsignal mit einer Wellenlänge im Bereich von 791 nm bis 812 nm liefert, und
das Pumpsignal eine Populationsumkehr der Erbiumionen zwischen dem ⁴S_{3/2}-Energieniveau und dem ⁴I_{15/2} Energieniveau durch Anregungszustandsabsorption bewirkt.

9. Optischer Verstärker nach Anspruch 8, bei dem die optische Pumpeinrichtung (12) ein Signal mit einer Wellenlänge von etwa 801 nm liefert.

10. Optischer Verstärker nach Anspruch 8 oder 9, bei dem der optische Wellenleiter (2) mit Fluorozirkonat eine optische Faser mit Fluorozirkonat ist.

11. Optischer Verstärker nach Anspruch 10, bei dem die optische Faser (2) mit Fluorozirkonat mit etwa 0,05 Gew.-% (5 x 10² ppm gewichtsbezogen) Erbiumionen dotiert ist.

## Revendications

1. Laser destiné à un fonctionnement à température ambiante comprenant :
un guide d'onde optique au fluorozirconate (2) dopé avec des ions erbium, le guide d'onde optique au fluorozirconate présentant une longueur d'onde de coupure en mode LP11 de 790 mn ou moins,
des réflecteurs (6, 10) agencés par rapport audit guide d'onde optique de façon à former une cavité optique présentant une longueur d'onde de résonance d'environ 546 nm, et
un moyen de pompage optique (12) couplé au guide d'onde pour fournir un signal de pompage optique qui, en utilisation amène la cavité optique à produire un effet laser à environ 546 nm, dans lequel
le moyen de pompage optique fournit un signal de pompage présentant une longueur d'onde dans la plage de 791 nm à 812 nm et
ledit signal de pompage permet une inversion de population des ions erbium entre le niveau d'énergie ⁴S_{3/2} et le niveau d'énergie ⁴I_{15/2} par absorption à l'état excité.

2. Laser selon la revendication 1, dans lequel le moyen de pompage optique (12) fournit un signal présentant une longueur d'onde d'environ 801 nm.

3. Laser selon la revendication 1 ou la revendication 2, dans lequel le guide d'onde optique au fluorozirconate (2) est une fibre optique au fluorozirconate.

4. Laser selon la revendication 3, dans lequel la fibre optique au fluorozirconate (2) est dopée avec environ 0,05 % en poids (5 x 10² ppm en poids) d'ions erbium.

5. Laser selon l'une quelconque des revendications précédentes, dans lequel le moyen de pompage optique (12) comprend une diode laser à semiconducteur.

6. Procédé d'obtention d'un effet laser dans la région du vert du spectre visible, le procédé comprenant un pompage optique d'une cavité laser avec une énergie de pompage présentant une longueur d'onde dans la plage de 791 nm à 812 nm, la cavité comprenant un guide d'onde optique au fluorozirconate (2) dopé avec des ions erbium présentant une longueur d'onde de coupure en mode LP11 de 790 nm ou moins et des réflecteurs (6, 10) agencés autour du guide d'onde optique pour définir la cavité laser, en favorisant ainsi une inversion de population des ions erbium entre les niveaux d'énergie ⁴S_{3/2} et ⁴I_{15/2} par absorption à l'état excité et fournissant une émission stimulée à longueur d'onde d'effet laser d'environ 546 nm.

7. Procédé consistant à réaliser une amplification optique dans la région du vert du spectre visible, le procédé comprenant
l'application d'une énergie de pompage optique présentant une longueur d'onde dans la plage de 791 nm à 812 nm à un guide d'onde optique au fluorozirconate (2) dopé avec des ions erbium et présentant une longueur d'onde de coupure en mode LP11 de 790 nm ou moins, en favorisant ainsi une inversion de population des ions erbium entre les niveaux d'énergie ⁴S_{3/2} et ⁴I_{15/2} par absorption à l'état excité, et
l'introduction d'un signal optique devant être amplifié dans ledit guide d'onde (2), dans lequel le guide d'onde fournit un gain optique aux environs de 546 nm par l'intermédiaire d'une émission stimulée de rayonnement à partir des ions erbium se relaxant au niveau d'énergie ⁴I_{15/2}.

8. Amplificateur optique destiné à amplifier de la lumière dans la région du vert du spectre visible, l'amplificateur comprenant :
un guide d'onde optique au fluorozirconate (2) dopé avec des ions erbium, le guide d'onde optique au fluorozirconate présentant une longueur d'onde de coupure en mode LP11 de 790 nm ou moins,
un moyen de pompage optique (12) couplé au guide d'onde (2) afin de fournir un signal de pompage optique qui, en utilisation, permet une amplification à environ 546 nm, caractérisé en ce que
le moyen de pompage optique (12) fournit un signal de pompage présentant une longueur d'onde dans la plage de 791 nm à 812 nm et
ledit signal de pompage permet une inversion de population des ions erbium entre le niveau d'énergie ⁴S_{3/2} et le niveau d'énergie ⁴I_{15/2} par absorption à l'état excité.

9. Amplificateur optique selon la revendication 8, dans lequel le moyen de pompage optique (12) fournit un signal présentant une longueur d'onde d'environ 801 nm.

10. Amplificateur optique selon la revendication 8 ou la revendication 9, dans lequel le guide d'onde optique au fluorozirconate (2) est une fibre optique au fluorozirconate.

11. Amplificateur optique selon la revendication 10, dans lequel la fibre optique au fluorozirconate (2) est dopée avec environ 0,05 % en poids (5 x 10² ppm en poids) d'ions erbium.
